# EUROPEAN PATENT APPLICATION

(11) **EP 2 538 198 A1**
(43) Date of publication of application: **26.12.2012**
(21) Application number: 12183809.8
(22) Date of filing: 31.07.2009
(51) Int. Cl.: G01N 11/14, B29C 35/02, G01N 3/00, G01N 3/06

(54) **Expert-System-Based Rheology**

(30) Priority: 01.08.2008 US 137640 P
(62) Divisional of application: 09785433.5
(71) Applicant: Malvern Instruments Limited, Malvern, Worcestershire WR14 1XZ (GB)
(72) Inventor: Wilkinson, John Paul, Gloucester, Gloucestershire GL3 3SN (GB); Thomas, James Francis, Telford, Shropshire TF4 2GW (GB); Langridge, Joanne Elizabeth, Gloucester, Gloucestershire GL4 3BQ (GB); Ritchings, Stephen John, Cirencester, Gloucestershire GL7 1BN (GB); Amin, Samiul, Solihull, West Midlands B91 2PD (GB)
(74) Representative: Lawrence, John

(57) **Abstract**

A rheometer for measuring properties of a sample is disclosed that includes mobile and fixed parts having contact surfaces for contacting the sample, vertical and rotary actuators for providing relative vertical and rotary motion between the mobile and fixed parts, and sample history storage operative to store a history that spans a plurality of different operations performed by the rheometer on a same sample.

## Description

### Cross-Reference to Related Application

This application claims the benefit of U.S. Provisional Application No.61/137,640 filed August 1, 2008, which is herein incorporated by reference.

### Field of the Invention

This invention relates to rheometers and to the application of rheology.

### Background of the Invention

Rheology is the study of flow and deformation of materials. An understanding of rheology can lead to insights that are critical in order to control and optimize various industrial processes (such as pumping, extruding, etc.) and consumer processes (dispensing a shampoo, rubbing a skin cream, etc.).

Rheology by its very nature is a complex science. Accurate insights can generally only be obtained through properly set up experiments in which the sample is correctly loaded, the correct geometry is used and the actual rheometry test and test parameters are representative of the process for which the insight is required. This is inherently difficult, as in addition to an understanding of the process it requires an understanding of the material type (gel, low viscosity solution, melt, etc.) and its response to loading conditions and geometries (thixotropy, slippage, etc.).

In terms of accurately setting up the test to be representative of the process (for example pumping, spreading, etc.) an understanding is required of whether the process is shear, extension or tension, whether it is stress or strain controlled, what are the relevant shear stresses or shear rates, and so forth.

The ability to take this understanding of material and processes and accurately set up the relevant rheological test requires input from people highly skilled in experimental rheology. Conversely, the lack of properly set up and executed rheological experiments can lead to inaccurate insights being generated and an inefficient use of resources if such personnel are not available.

### Summary of the Invention

In one general aspect, the invention features a rheometer for measuring properties of a sample that includes a mobile part having a contact surface for contacting the sample, a fixed part having a contact surface for contacting the sample, a vertical actuator for providing relative vertical motion between the mobile part and the fixed part, and a rotary actuator for providing relative rotary motion between the mobile part and the fixed part. The rheometer also includes material property storage that stores at least one property for each of a plurality of materials, process parameter storage that stores at least one parameter for each of a plurality of processes, a material selection control operative to receive a material selection for use as the sample, and an objective selection control operative to receive an experimental objective selection. Rheometry logic is responsive to the material selection control, to the objective selection control, to the material property storage, and to the process parameter storage, and is operative to assist the user with a measurement using the rheometer.

In preferred embodiments, the material selection control and the objective selection control can be part of a user interface for the rheometer. The rheometry logic can include a geometry selection output operative to provide the user assistance by communicating a selected geometry selection for the mobile part. The rheometry logic can include parameter generation logic operative to provide the user assistance by providing test parameters for the rheometer. The rheometry logic can include option generation logic operative to provide the user assistance by providing a list of testing options for a particular set of parameters for the rheometer. The rheometry logic can include control logic operative to provide the user assistance by controlling parts of the rheometer. The rheometry logic can include sequence generation logic operative to generate a control sequence for the rheometer. The control sequence can be generated by retrieving a stored sequence from the process parameter storage. The rheometer can further include a sequence editing interface for editing generated control sequences. The control logic can be operative to control the rotary actuator and the vertical actuator. The control logic can be operative to control the temperature for a test. The rheometry logic can be further responsive to user-entered parameters. The rheometry logic can be further responsive to test results from the rheometer. The rheometry logic can be further responsive to an identification signal that identifies an attribute of the rheometer. The identification signal can identify an environmental control module. The process storage can be organized by industry.

In another general aspect, the invention features a rheometer for measuring properties of a sample that includes a mobile part having a contact surface for contacting the sample, and a fixed part having a contact surface for contacting the sample. The rheometer also includes a vertical actuator for providing relative vertical motion between the mobile part and the fixed part, and a rotary actuator for providing relative rotary motion between the mobile part and the fixed part. Sample history storage is operative to store a history that spans a plurality of different operations performed by the rheometer on a same sample.

In preferred embodiments the rheometer further includes rheometry logic responsive to the sample history storage and operative to derive selections of further operations to perform on the sample based on the stored sample history. The rheometry logic can further include control logic operative to control the rheometer based on the derived selections. The control logic can be operative to continuously control the rheometer based on a continuously updated sample history.

Systems according to the invention can be advantageous in that they can assist users in setting up rheology experiments. This can speed up the selection of experiments, provide increased accuracy in the results of experiments, and may even allow relatively inexperienced users to achieve meaningful results. Providing for sample history to be stored in a rheometer can also help users make more precise and insightful measurements.

### Brief Description of the Drawings

Fig. 1 is a block diagram of a rheometer according to the invention;
Fig. 2 is a family of plots of viscosity against shear stress for a skin cream sample;

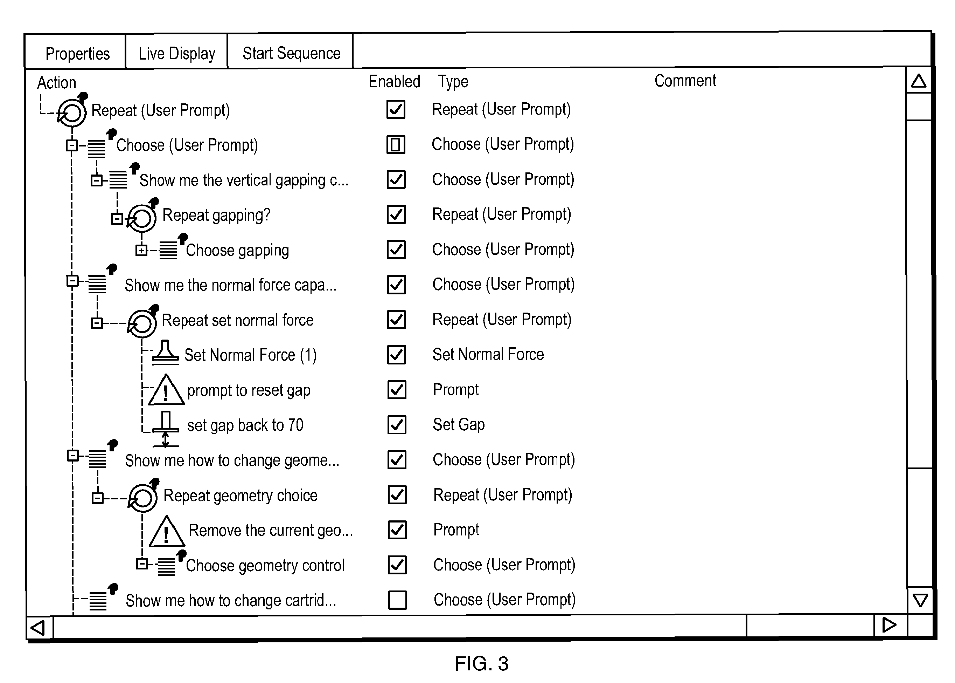

Fig. 3 is a screenshot of a sequence authoring screen for the rheometer of Fig. 1, showing a simple demo sequence;
Fig. 4 is a screenshot of a search listing of application notes for a particular skin cream problem for the rheometer of Fig. 1;
Fig. 5 is a screenshot of a search listing of sequences for the skin cream problem presented in connection with Fig. 4 for the rheometer of Fig. 1;
Fig. 6 is a screenshot of an illustrative prompting screen for the rheometer of Fig. 1; and
Figs. 7A-7C are a flowchart illustrating the operation of the rheometer of Fig. 2.

### Detailed Description of an Illustrative Embodiment

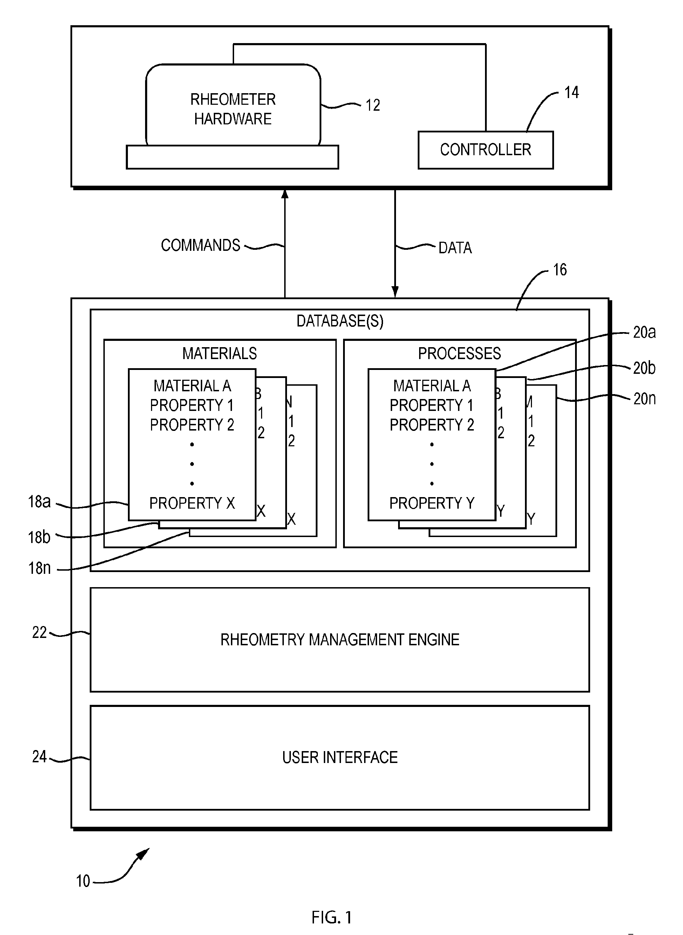

Referring to Fig. 1, an illustrative rheometer 10 includes rotary rheometer hardware 12 and a controller 14 that performs low-level control and oversight functions. As is well known, the rheometer hardware typically includes a top part and a bottom part with a vertical actuator for providing relative vertical motion between the mobile part and the fixed part, and a rotary actuator for providing relative rotary motion between the mobile part and the fixed part.

The rheometer also includes storage 16, such as a database, for material and process information. The materials database includes a number of entries 18a, 18b, ... 18n for a number of different materials, and each entry includes information about that material, such as its properties. The process database includes a number of entries 20a, 20b, ... 20n about a number of different processes, and each entry includes information about that process, such as parameters that are important in setting up rheological tests.

The rheometer also includes a rheometry management engine 22. The rheometry management engine interacts with the database(s), a user interface 24 for the rheometer, and the rheometer hardware. In this embodiment, the rheometer hardware and controller are housed in a chassis, and the databases, rheometry management engine, and user interface are implemented with a standalone computer workstation running a standard operating system and special-purpose software. It is also possible to create an implementation that is based on specialized custom hardware, or a combination of the two approaches.

The various elements and steps described can be reorganized, divided, and combined in different ways without departing from the scope and spirit of the invention. For example, all parts of the system could be integrated into a single chassis, or program logic could be split into different functional sub-parts. The database can range from a collection of files to a more powerful and feature-rich database.

In operation, the rheometry logic can provide a rheometry-specific assistance to the user through the material and process information stored in the database(s) based on user-supplied experimental objectives. It can achieve this goal through the use of various types of well-known methodologies, such as inference engine technology. The exact approach employed will depend on a variety of implementation issues, such as the types of applications supported.

Types of assistance provided can include selecting a geometry for a particular material based on its stored properties, suggesting test parameters for a particular type of experiment, selecting data sets relevant to a particular objective, or even directly controlling the rheometer. It is also possible for the rheometer to create a control sequence for the rheometer, which can be used directly or edited. The rheometry logic can also use an identification signal provided by interchangeable parts of the rheometer, such as environmental control modules, in a providing its assistance to the user. Interchangeable cartridges are discussed in more detail in a commonly owned provisional application entitled RHEOMETER WITH MODULAR ENVIRONMENTAL CONTROL SYSTEM, filed on the same day as this application. As discussed above, prior art systems tend to require its users to be people highly skilled in experimental rheology and to have an understanding of material and processes to accurately set up a relevant rheological test. But these are skills that are not commonly encountered in a wide range of industries. Rheometers equipped with the type of rheometry logic described in connection with this embodiment can help even relatively unskilled users to achieve better experimental results.

One example of the need for assistance is for a rheological phenomenon known as thixotropy. A large proportion of materials that are measured using a rheometer are thixotropic - their internal structure breaks down as they are sheared and require a finite time to rebuild the original structure. The act of placing the sample onto the rheometer can disturb its structure and reduce the accuracy and repeatability of the rheological testing. Loading the sample can, in extreme cases, be the largest influence on data accuracy.

The sample is loaded onto the rheometer and the measurement head of the rheometer is lowered into the sample. This process can exert stresses and strains onto the sample that are quite large and that can easily disturb the sample's structure. All of this happens before a test is even started. The results of the test can be greatly affected by the strain history - what has happened to the sample before the point at which it is being tested.

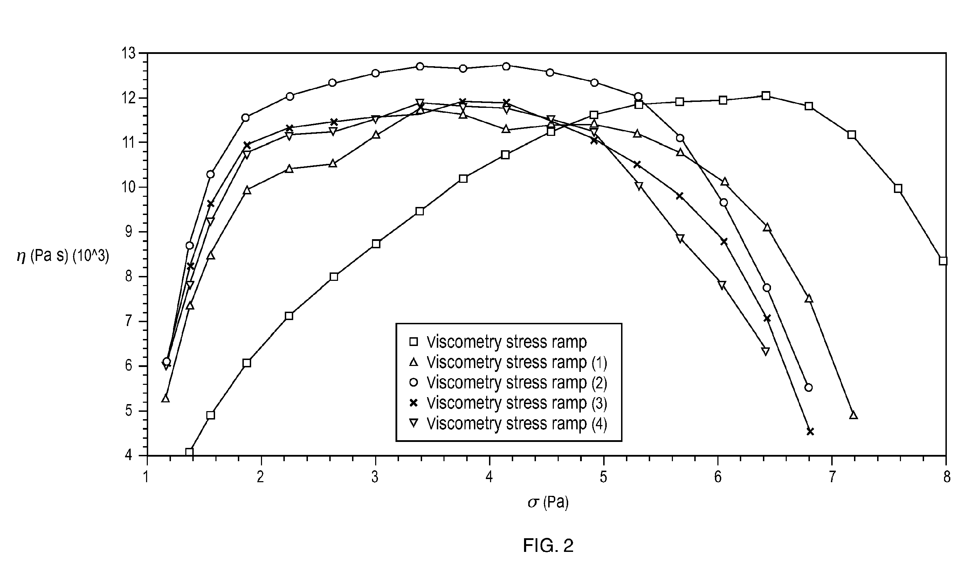

Referring to Fig. 2, the importance of sample history is illustrated by a series of experiments in which a skin cream is exposed to a stress ramp. The only difference between these plots results from a different level of initial stress on the sample. This is due to the fact that many material systems tested on a rheometer structures that are very sensitive to stresses and/or strains that they experience, and these changes in the structure impact measured rheological responses. Having well-defined and prescribed loading protocols (based on information in the material database) and having knowledge of the sample throughout the experiment becomes extremely useful -- both to get consistent results as well as to get insights on the sensitivity of the material structure to various stresses and/or strains and the corresponding rheological response. In this example, knowledge of the process (pumping) and the knowledge of the material database (skin creams) come together to give a solution to a user's problem in a rheologically sound and robust manner.

Referring to Fig, 3, the use of the illustrative rheometer to investigate these skin care problem now be discussed in more detail. The rheometer bases its tests on fully programmable sequences. These sequences can be made up of a variety of constructs, including instrument actions, prompts, and displays, as well as other conventional programming constructs. Sequences can be developed by any appropriate party, such as the rheometer manufacturer, a consultant, or an end-user.

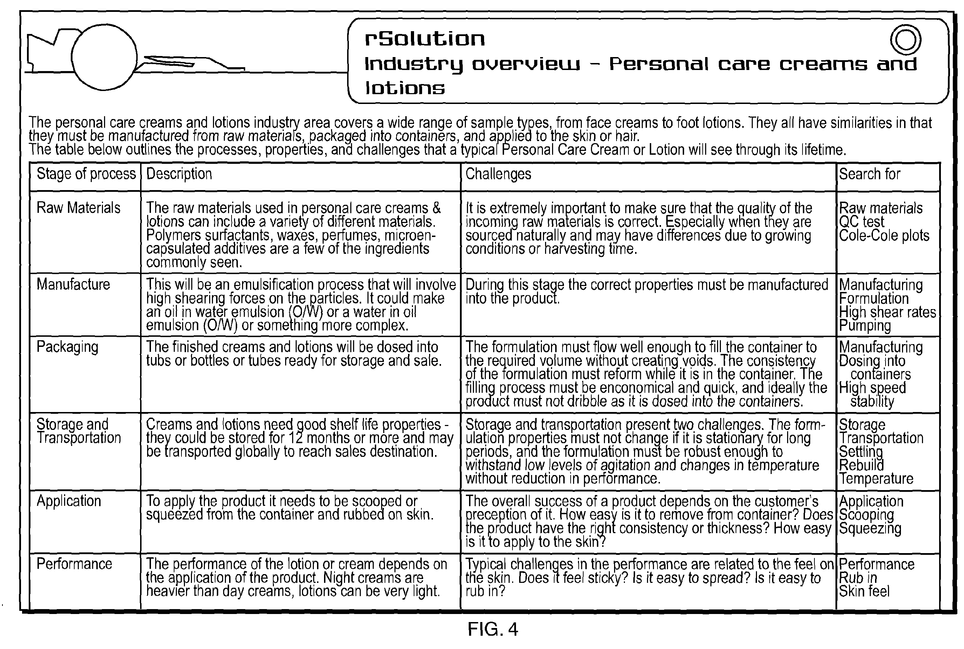

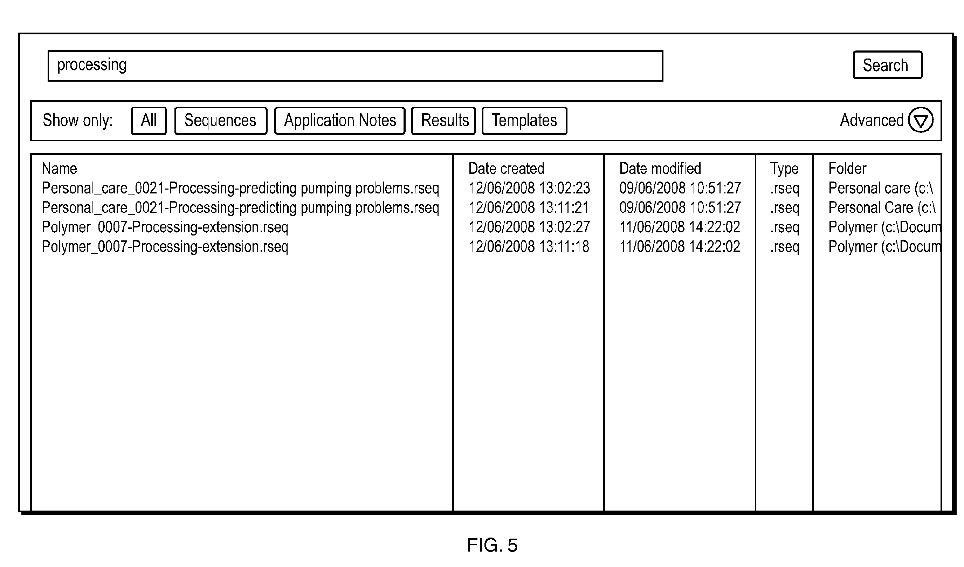

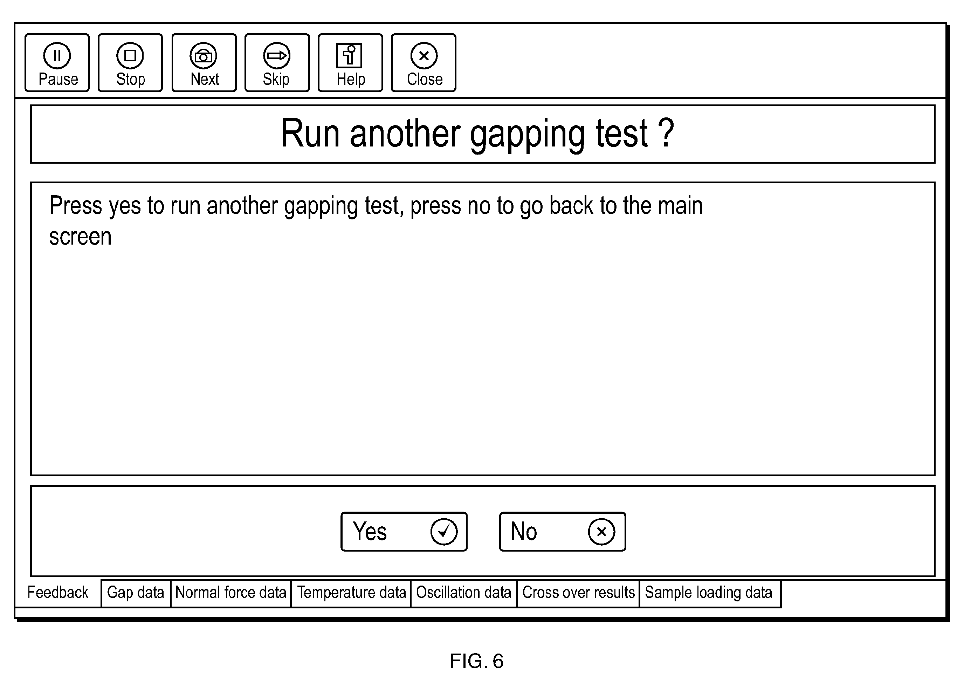

Referring to Fig. 4, the user can search the rheometer's database for "personal-care overview," for example, and the system will return a list of pertinent application notes. Referring to Fig. 5, after reviewing these notes, the user can narrow his or her search to find individual sequences. The user can then select an appropriate sequence and run it. This sequence will explain and walk the user through an experiment appropriate to his or her objective. Referring to Fig. 6, the rheometer may present prompt screens during the sequence to prompt the user to perform certain operations, such as setting the system geometry or changing an environmental control cartridge. The sequence can also perform many operations without the user's help, such as setting a temperature, or running a test.

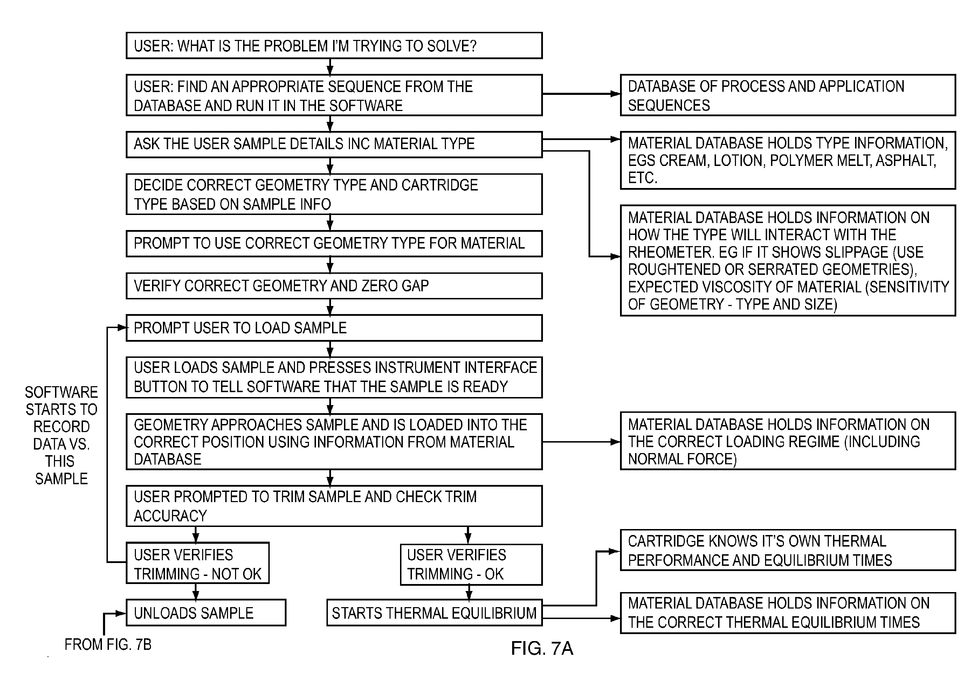

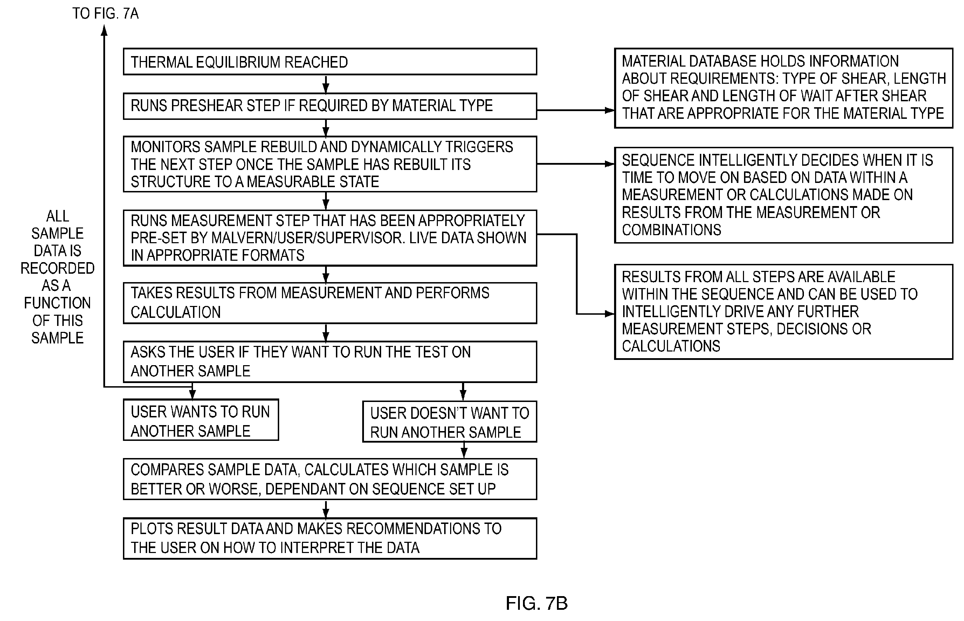

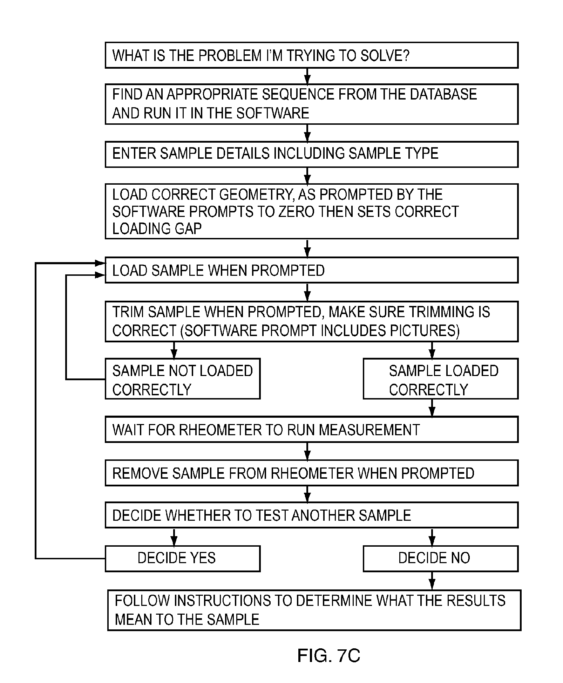

A flowchart illustrating a detailed sets of operations illustrating the solution of an industry-specific problem is also outlined in Figs 7A-B and 7C. Actions in the left column are performed by the rheometer unless otherwise specified, although some steps could be provided by either the user or the rheometer. For example, the rheometer can set a temperature or it can prompt the user to set a temperature. Blocks in the right column indicate how expert rheometry knowledge can be applied to individual steps.

Systems according to the invention can provide a comprehensive material and process database, with all rheologically relevant parameters having been generated and linked with instrumental, geometry and loading parameters for accurate sample loading, geometry selection and automatic test configuration, set up, and execution.

The material database can be a comprehensive database of materials which are industrially relevant and which are appropriate for rheological characterization. These can include polymers, various complex fluids (colloidal suspensions, emulsions, foams, self-assembling systems, biofluids) asphalt, fuel, oils, pharmaceutical and personal care creames and lotions, food products, such as mayonnaise, ketchup, yogurt, etc.

The information contained in the material database may include properties such as:
Expected range of viscosity
Size of Particles Present
Thixotropy in the Sample
Slippage in the sample
Sample Loading Temperature
Sample Loading Normal Force
Test temperatures and equilibrium values
Density
Physical transition points
Shelf life
Preshear parameters

The process database can be a comprehensive database of rheology-relevant processes across a range of different industries, each sequence can be application specific and pre-programmed with appropriate rheological tests for the problem, appropriate settings for important parameters, and appropriate geometry information so that a novice user can make reliable and correct rheological measurements on their sample. Illustrative categories of processes can include:
Home and Personal Care
Foods
Paints and Coatings
Pharmaceutical and Drug Delivery
Medical
Nanotechnology
Petrochemical
Speciality Chemicals
Cement and Ceramic

In addition, some processes that are especially relevant for a range of material types, such as polymers (melts and solutions), complex fluids (colloidal suspensions, emulsions, foams, self-assembling systems, biofluids) asphalt, are included. Process and Material information can be populated in a number of ways, such as by the instrument manufacturer, by the user, or based on industry or company standards.

The following are some specific software/hardware features that can allow the accurate sample loading, geometry selection and automatic test configuration, set-up and execution (Intelligent Rheometry Linking Mechanism):
- Fully programmable software interface - The software can configure the rheological test as a sequence of actions that can be put together in an order appropriate for the requirements of the customer's sample. Instrument and material parameters are exposed to the sequence and can be used within the sequence for intelligent decision making. Parameters are available from various sources, including but not limited to the material database, the instrument parameters and settings, measurement geometry settings, results from within the sequence, and user entered variables which can be combined at design time to create a self-modifying test that automatically uses the correct settings.
- Absolute knowledge of sample history - The software can be configured in such a way that all temperature, gap, normal force and stresses and strains that have been exerted on the sample since it was placed in the rheometer are measured and recorded. These can be plotted against the time scale of the experiment (useful for comparing thixotropic samples) or against the time scale of some internal or external parameter (e.g. when the sample was manufactured or mixed or put onto the rheometer--regardless of how many experiments have been made on it.
- Dynamic control of the gap and normal force parameters by the digital system-Intelligent control loop for the Normal Force (NF) and gap settings. Normal force and gap are important parameters for complete sample knowledge. Rheology is a 3D science, and much can be gained from a complete knowledge of the actual geometry of the sample while it is being measured, as well as the vertical force that has been / is being exerted on it or by it. The instrument uses a digital control loop which accurately controls the normal force and the gap throughout the sample's time on the rheometer. These parameters can be set dynamically through the sequence according to the type of sample and geometry being used. Digital control of rheometers is described in a commonly-owned application filed on the same day as this application and entitled RHEOMETER CONTROL SYSTEM.

### Examples

A few examples of how the rheometer can be used follow.

### Loading, Geometry:

- Dynamic recommendation of geometry to use based on parameters such as whether the sample is thixotropic, how big the particles in it are and the expected range of viscosity.
- Automatic setting of the gapping profile used or the maximum normal force used for a certain sample and geometry combination.

### Process Relavant Test

- Industry-Personal Care, Process-Pumpability of Skin Creames-link to process database--automatic loading of Yield Stress Test-will guide user through choice of appropriate geometry and accurate loading of sample (link to material database), and then run stress ramp to determine yield stress. Documentation on link of yield stress to pumpability will automatically load.

### Rheological best practice used within the test

- Each part of the sequence can be set with parameters that will stop the test if certain rheological criteria have been reached - e.g. an automatic recognition of the end of the linear viscoelastic region (LVER) can be used to make sure the sample isn't over strained so that further tests can be made on the same sample, a value from within the LVER can then be used in all subsequent testing in the sequence to make sure that the data being measured is within the LVER (or outside it, if desired).

Generally, the embodiments described can provide a method whereby accurate sample loading and geometry selection is accomplished through software/hardware features that allow appropriate parameters to be adjusted based on the sample, including, but not restricted to the geometry selection parameters, gapping profile, maximum normal force. These are determined through linking with a comprehensive material database. The embodiments described can also provide a method whereby accurate rheological test configuration, set up and execution is automatically accomplished through a fully programmable software interface that allows test type and test parameters to be determined and loaded in through linking with a comprehensive process database. They may also provide a method whereby the sequence of testing can be dynamically altered to suit the sample based on the sample database parameters and their interaction with other parts of the system, software and sequence as it runs. As used in a comprehensive, sample type specific, process database.

The present invention has now been described in connection with a number of specific embodiments thereof. However, numerous modifications which are contemplated as falling within the scope of the present invention should now be apparent to those skilled in the art. It is therefore intended that the scope of the present invention be limited only by the scope of the claims appended hereto. In addition, the order of presentation of the claims should not be construed to limit the scope of any particular term in the claims.

Other aspects according to the invention may include:
1. A rheometer for measuring properties of a sample, comprising:
   a mobile part having a contact surface for contacting the sample,
   a fixed part having a contact surface for contacting the sample,
   a vertical actuator for providing relative vertical motion between the mobile part and the fixed part,
   a rotary actuator for providing relative rotary motion between the mobile part and the fixed part,
   material property storage that stores at least one property for each of a plurality of materials,
   process parameter storage that stores at least one parameter for each of a plurality of processes,
   a material selection control operative to receive a material selection for use as the sample,
   an objective selection control operative to receive an experimental objective selection, and
   rheometry logic responsive to the material selection control, to the objective selection control, to the material property storage, and to the process parameter storage, and operative to assist the user with a measurement using the rheometer.
2. The apparatus of aspect 1 wherein the material selection control and the objective selection control are part of a user interface for the rheometer.
3. The apparatus of aspect 1 or aspect 2 wherein the rheometry logic includes a geometry selection output operative to provide the user assistance by communicating a selected geometry selection for the mobile part.
4. The apparatus according to any one of the preceding aspects wherein the rheometry logic includes parameter generation logic operative to provide the user assistance by providing test parameters for the rheometer.
5. The apparatus of any one of the preceding aspects wherein the rheometry logic includes option generation logic operative to provide the user assistance by providing a list of testing options for a particular set of parameters for the rheometer.
6. The apparatus of any one of the preceding aspects wherein the rheometry logic includes control logic operative to provide the user assistance by controlling parts of the rheometer.
7. The apparatus of aspect 6 wherein the rheometry logic includes sequence generation logic operative to generate a control sequence for the rheometer.
8. The apparatus of aspect 7 wherein the control sequence is generated by retrieving a stored sequence from the process parameter storage.
9. The apparatus of aspect 7 or aspect 8 further including a sequence editing interface for editing generated control sequences.
10. The apparatus of any one of aspects 6 to 9 wherein the control logic is operative to control the rotary actuator and the vertical actuator.
11. The apparatus of any one of aspects 6 to 10 wherein the control logic is operative to control the temperature for a test.
12. The apparatus of any one of the preceding aspects wherein the rheometry logic is further responsive to user-entered parameters.
13. The apparatus of any one of the preceding aspects wherein the rheometry logic is further responsive to test results from the rheometer.
14. The apparatus of any one of the preceding aspects wherein the rheometry logic is further responsive to an identification signal that identifies an attribute of the rheometer.
15. The apparatus of any one of the preceding aspects wherein the identification signal identifies an environmental control module.
16. The apparatus according to any one of the preceding aspects wherein the process storage is organized by industry.

## Claims

1. A rheometer for measuring properties of a sample, comprising:
a mobile part having a contact surface for contacting the sample;
a fixed part having a contact surface for contacting the sample;
a vertical actuator for providing relative vertical motion between the mobile part and the fixed part;
a rotary actuator for providing relative rotary motion between the mobile part and the fixed part; and
sample history storage operative to store a history that spans a plurality of different operations performed by the rheometer on a sample.

2. The apparatus of claim 1 comprising rheometry logic including control logic operative to control the rotary actuator and vertical actuator, and sequence generation logic operative to generate a control sequence for the rheometer, the rheometry logic being responsive to test results from the rheometer in the sample history storage.

3. The apparatus of claim 1 further including rheometry logic responsive to the sample history storage and operative to derive selections of further operations to perform on the sample based on the stored sample history.

4. The apparatus of claim 3 wherein the rheometry logic further includes control logic operative to control the rheometer based on the derived selections.

5. The apparatus of claim 2 or claim 4 wherein the control logic is operative to continuously control the rheometer based on a continuously updated sample history.

6. A method of performing a rheological test on a test sample using the rheometer of claim 1 comprising loading a test sample into the rheometer and the measurement head, optionally comprising the mobile part, into the sample, and using the sample history to control operation of the rheometer.

7. A method according to claim 6 further comprising performing a first rheological test on the sample and storing the results of the first test, and performing a second test on the sample using the results of the first test to control the rheometer.

8. A method according to claim 6 or claim 7 comprising continuously updating the sample history and continuously controlling the rheometer using the continuously updated sample history.

9. A method according to claim 6 or claim 7 comprising performing a test on the sample to determine the end of a linear viscoelastic region of the sample, waiting for the sample to recover, and performing subsequent tests either (i) within, or (ii) outside, of the viscoelastic region as desired and storing the results of such tests.

10. A method according to claim 6 comprising dynamically altering a sequence of testing to suit the test sample based on parameters from a sample database and their interaction with other parts of the system, software and sequence as it runs, using a sample type specific, process database.
